# EUROPEAN PATENT APPLICATION

(11) **EP 1 024 447 A2**
(43) Date of publication of application: **02.08.2000**
(21) Application number: 99309344.2
(22) Date of filing: 23.11.1999
(51) Int. Cl.: G06F 17/60

(54) **Routing of E-mails**

(30) Priority: 26.01.1999 GB 9901531
(71) Applicant: Hewlett-Packard Company, Palo Alto, California 94304 (US)
(72) Inventor: Mowbray, Miranda, Bristol BS8 2AH (GB)
(74) Representative: Lawrence, Richard Anthony

(57) **Abstract**

A method and system are described for routing incoming e-mails, for example in a customer interaction centre. E-mail addresses are used which are formed from a traditional user name, a novel topic identifier and a traditional domain name, for example of the form {user_identifier}:{topic_identifier}@{domain_name}. The topic identifier of a particular e-mail is relevant to the topic of the content of that e-mail. Routing of e-mails is based on the topic identifiers. By using the topic identifiers in the addresses, the e-mails do not necessarily need to be opened in order to route them. A correspondence between the topic identifiers and the addresses of agents best able to deal with those topics is held in a table, which can easily be updated to take account of changes in circumstances.

The source addresses in outgoing e-mails are modified to include the topic identifiers, so that reply e-mails to those outgoing e-mails automatically include the topic identifiers.

## Description

This invention relates to a method of and a system for routing e-mails.

The invention was originally conceived for use in customer interaction centres, but it does have other applications.

Skills-based routing of communications, such as letters and telephone calls, is an important aspect of modern customer communications centres, the aim being to route the communication to the person (or "agent") best able to deal with it. For example, considering telephone calls, a telephone operator will try to ascertain the nature of a new enquiry from a person calling (or "customer") and then connect the customer to the agent most capable of dealing with it. More recently, telephone systems have been introduced which play messages to the customer and invite them to press particular keys on their telephone, to which the system responds so as to route the call to an appropriate agent.

Once the initial contact has been made, the agent can assign a reference number, or topic identifier, to the enquiry and ask the customer to refer to that topic identifier in future communications. Such topic identifiers can be particularly useful when there are several customers who are involved with the same problem, or when a particular customer has several different problems or enquiries.

E-mail is becoming increasingly popular as a means of communication, and there is a need to apply the above-mentioned techniques to e-mail communication. Known approaches to this employ multiple static e-mail addresses, content analysis, and the source e-mail address.

In the following simple examples, an organisation has a default e-mail address of mail@domain1.com and further e-mail addresses of sales@domain1.com, accounts@domain1.com and support@domain1.com for the sales, accounts and support departments, respectively, each with their own mailbox. A customer has an e-mail address of customer@domain2.com

With a static e-mail address approach, after an initial communication from a customer to mail@domain1.com concerning, say, an accounts matter, the customer might then be asked to reply to accounts@domain1.com. Static e-mail addresses have a high granularity. There is a separate mailbox for each static e-mail address. Accordingly, there should preferably be not many of them, and therefore little information can be gleaned about the content of an e-mail from the fact that it has been sent to a particular e-mail address. Furthermore, if a particular static e-mail address is dedicated to urgent e-mails (e.g. urgent@domain1.com), then once a customer learns of that address, they can send all subsequent e-mails to that address with high priority, and it can cause significant problems to demote them.

With a content analysis approach, an e-mail is received (e.g. at mail@domain1.com) and is opened. An analysis is then carried out based on keywords in the text of the e-mail in order to determine which mailbox to route the e-mail to. The e-mail is then forwarded to that mailbox. Problems with this approach are that it is slow, can create bottlenecks and is not always accurate.

With a source address approach, once an e-mail from the customer with e-mail address customer@domain2.com has been sent to mail@domain1.com, and once it has been determined that they are concerned about, say, an accounts matter, the system is set so that future e-mails from customer@domain2.com to mail@domain1.com are routed instead to accounts@domain1.com. Problems with this approach are that: the customer may have other communications with the organisation on other matters which will then be mis-routed; the customer may have several e-mail addresses, and communications from their other e-mail addresses will need to be allocated afresh; and the customer may share their e-mail address with other customers who have communications with the organisation of a different nature, and which may therefore be mis-routed.

The present invention is concerned with alleviating at least some of the problems with the approaches discussed above.

To this end, the present invention uses e-mail addresses which incorporate topic identifiers and employs routing of e-mails based on the topic identifiers in the e-mail addresses. The topic identifier of a particular e-mail is relevant to the topic of the content of that e-mail.

Stated more formally, in accordance with a first aspect of the present invention, there is provided a method of routing e-mails, wherein: each e-mail includes a message and a destination address; and at least some of the e-mails are each of a first type for which the destination address is formed from a user identifier, a topic identifier and a domain name, the topic identifier being relevant to the topic of the respective message. The method comprises the steps of: maintaining a table of entries, each entry including one of a plurality of such topic identifiers and a respective one of a plurality of forwarding addresses; receiving an e-mail of the first type; extracting the respective topic identifier from the destination address of the e-mail which has been, or is being, received; determining from the table which one of the forwarding addresses corresponds to the topic identifier extracted from the respective e-mail; and routing the e-mail to a respective one of a plurality of mailboxes in dependence upon the forwarding address determined from the table.

By employing the table, it is not necessary to have a separate mailbox for each topic. Furthermore, the table may be changed without changing the topic identifiers or the addresses to which incoming e-mails need to be sent, for example to take account of changes of agents, holidays, or other reorganisations.

By including the topic identifier in the destination address, it is not necessary to open the e-mail in order to determine where to route it (although in some embodiments of the invention this may also be done). Furthermore, for a particular e-mail, the step of extracting the topic identifier from the respective destination address may be commenced (and may even be completed) before the step of receiving that e-mail has been completed, so that routing can be conducted without significant delay.

In the destination address contained in such an e-mail, the topic identifier may have a predetermined length, in which case, in the extracting step, a portion of the destination address of said predetermined length may be extracted. Additionally or alternatively, the topic identifier may begin at a first predetermined position and/or end at a second predetermined position, in which case, in the extracting step, a portion of the destination address beginning at said first predetermined position and/or ending at said second predetermined position may be extracted. Additionally or alternatively, the topic identifier may be delimited at least in part by at least one predetermined character, in which case, in the extracting step, a portion of the destination address which is delimited at least in part by said at least one predetermined character may be extracted. Each of these features facilitates the extraction of the topic identifier from the destination address.

Each destination address is preferably a concatenation of the user identifier, the topic identifier, the domain name, and optionally at least one predetermined delimiter character. In addition to this resulting in the address, at a casual glance, having some meaning even if the meaning of the topic identifier is not known, it also means that if the topic identifier becomes obsolete and is deleted from the table, it is still possible simply to route a subsequently received e-mail which contains that topic identifier to a relevant mailbox (assuming that the user identifier is still valid).

For at least some of the forwarding addresses, there may be a one-to-one correspondence between at least some of the mailboxes and those forwarding addresses. On the other hand, for at least some of the forwarding addresses, each e-mail may be routed to one of the mailboxes selected in dependence upon: the forwarding address for the respective e-mail; and the destination address of that e-mail, a source address contained in that e-mail, an analysis of the message in that e-mail, and/or weightings for the mailboxes (which may be determined, for example, from the relative workloads or availabilities of the owners of those mailboxes).

Each entry in the table may include one of a plurality of priority identifiers, in which case the method preferably includes the steps, for each such e-mail, of: determining from the table which one of the priority identifiers corresponds to the respective extracted topic identifier; and adding the determined priority identifier to the e-mail. Priorities can therefore be changed by changing the table.

The method may further include the step of adding, deleting and/or amending such entries to, from and/or in the table, and this may be performed by a database management system. Preferably, the database management system is operable to store details of communications, and, for a communication on a topic which is adjudged to be new, to assign a new topic identifier thereto and to store the new topic identifier and a respective forwarding address therefor in the table.

At least some other of the e-mails may each be of a second type for which such a topic identifier is not used in forming the destination address, the method further including the steps of: receiving e-mails of the second type in addition to the first type; determining whether or not the destination address of each such e-mail which is being, or has been, received includes such a topic identifier; and, if not, routing the respective e-mail to a predetermined one of the mailboxes or to a selected one of the mailboxes selected in dependence upon the destination address of that e-mail, a source address contained in that e-mail, an analysis of the message in that e-mail, and/or weightings for the mailboxes.

The method may further include the steps of: generating e-mails each containing a message and a source address; transmitting the generated e-mails; and modifying the source address of each such generated e-mail, prior to transmission, so as to include such a topic identifier relevant to the respective message. In this case, the topic identifier is preferably selected in dependence upon one of the following: input from a person generating the e-mail; a topic identifier in a previous e-mail to which the e-mail in question is a reply; the identity of the person generating the e-mail; the identity of a workgroup to which the person generating the e-mail belongs; and the identity of a machine with which the e-mail is generated. It will be appreciated that if the customer replies to a received e-mail using the reply facility typically found in e-mail applications, the source address of the received e-mail will become the destination address of the reply e-mail and will therefore automatically include the topic identifier.

In accordance with a second aspect of the present invention, there is provided a corresponding system for routing such e-mails, comprising: means for maintaining a table of entries, each entry including one of a plurality of such topic identifiers and a respective one of a plurality of forwarding addresses; means for receiving an e-mail of the first type; means for extracting the respective topic identifier from the destination address of the e-mail which has been, or is being, received by the receiving means; means for determining from the table maintaining means which one of the forwarding addresses corresponds to the topic identifier extracted from the respective e-mail; and means for routing the e-mail to a respective one of a plurality of mailboxes in dependence upon the forwarding address determined by the forwarding address determining means.

A specific embodiment of the present invention will now be described, purely by way of example, with reference to the accompanying drawings, in which:
- Figure 1: illustrates an address book of a customer interaction centre;
- Figure 2: illustrates a topic database of the centre;
- Figure 3: illustrates a routing table of the centre;
- Figure 4: is a flow diagram of a routine performed at the centre in response to an incoming e-mail;
- Figure 5: is a flow diagram of a routine performed at the centre when an incoming e-mail is forwarded to a default mailbox; and
- Figure 6: is a flow diagram of a routine performed at the centre when an outgoing e-mail is being composed and sent.

In the embodiment of the invention which will now be described, a customer interaction centre has a networked computer system which is connected to the Internet and which includes a computer for each agent working at the centre. The computer system provides for internal and external e-mail, and each agent has their own e-mail address and their own mailbox for incoming e-mail ("inbox").

In the example which will be described, the customer interation centre has a general e-mail address of mail@domain1.com. The "mail" part of this address is generally known as the "user name", and the "domain1.com" part of the address is the "domain name". The two parts being separated by an "@". Three of the agents who work in the Support Department of the centre are called Fred, Bert and Jim, and their individual e-mail addresses are fred@domain1.com, bert@domain1.com and jim@domain1.com. The Support Department also has a departmental e-mail address of support@domain1.com. Another of the agents at the centre, Alice, is responsible for allocation of unidentified incoming e-mails, and her e-mail address is alice@domain1.com.

With a customer interaction centre as described so far, and in the absence of the features of the present invention, any e-mail sent to an e-mail address ending @domain1.com would be sent to the customer interaction centre, and the e-mail handling program at the customer interaction centre would be set up to forward e-mails with a valid full e-mail address, such as fred@domain1.com, to the inbox of the appropriate person, whereas any e-mail with an invalid full e-mail address, or with the address mail@domain1.com is deposited in Alice's inbox. It is then her responsibility to forward that e-mail to the appropriate agent, or to deal with it herself. Unless Fred, Jim or Bert are sending personal e-mail, they normally send their outgoing e-mails so that they include the source address support@domain1.com, rather than their own personal e-mail addresses.

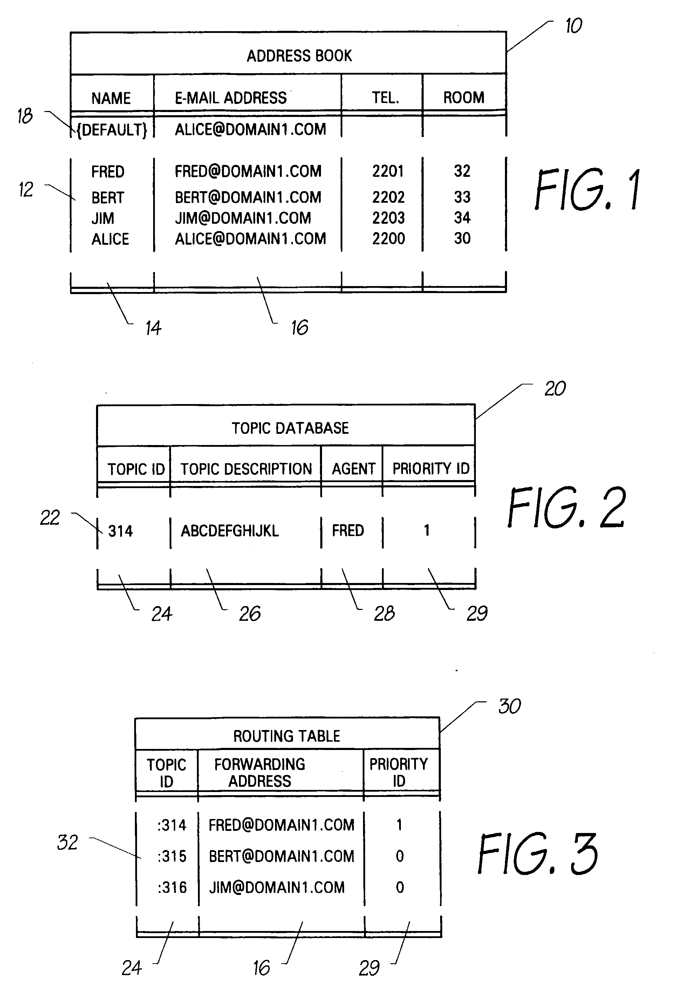

In the embodiment of the invention, the computer system has an internal address book 10 as shown in Figure 1. Each entry 12 in the address book 10 includes the name 14 of an agent (e.g. Fred), their e-mail address 16 (e.g. bed@domain1.com), and possibly other information. The address book 10 also includes a default entry 18 giving the e-mail address (alice@domain1.com) to which unidentified incoming e-mails are to be forwarded.

Referring to Figure 2, the computer system also has a topic database 20. Each entry 22 in the topic database relates to a particular live topic being handled by the agents at the customer interaction centre. Each entry 22 includes a topic identifier 24, which in the example is a three digit number, a short description 26 of that topic, the name 28 of the agent best able to deal with communications on that topic, and a p riority identifier 29, which may simply be a "1" for urgent and a "0" for non-urgent.

From the information in the address book 10 and the calls database 20, the computer system maintains a routing table 30 as shown in Figure 3. Each entry 32 in the routing table relates to a particular topic and comprises the topic identifier 24 obtained from the topic database 20, in this case preceded by a colon ":", the priority identifier 29 obtained from the topic database 20, and the e-mail address 16 of the agent for that topic, obtained from the address book 10 and the topic database 20.

In addition to the e-mail addresses mentioned above, the embodiment of the invention employs topic-identified e-mail addresses, of the form {user_identifier}:{topic_identifier}@{domain_name}. These addresses are such that, after removal of the :{topic_identifier}, the residue, {user_identifier}@{domain_name}, is a valid traditional e-mail address, such as those mentioned above. An example of a topic identified e-mail address is support:314@domain1.com.

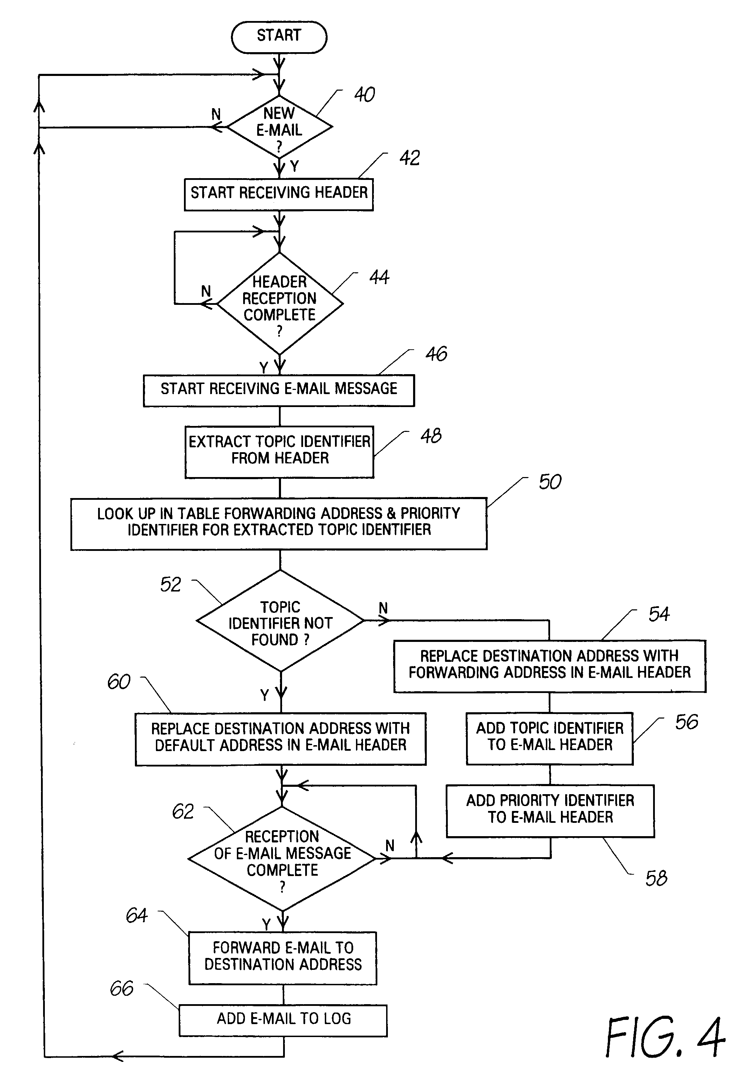

The e-mail handling program of the computer system is arranged to process incoming e-mails in the manner illustrated in Figure 4. When there is a new incoming e-mail (step 40 - yes), firstly its header is received in steps 42,44. The header includes the source address (e.g. customer@domain2.com) and the destination address for the e-mail. In step 46, the message of the e-mail starts to be received. While this is happening, in step 48, an attempt is made to extract a topic identifier from the destination address in the received e-mail header, by taking the four characters immediately preceding the "@" in the destination address. For example, if the destination address were support:314@domain1.com, the extracted topic identifier would be ":314", whereas if the destination address were mail@domain1.com, the extracted (but invalid) topic identifier would be "mail". In step 50, the extracted topic identifier is used to look up a forwarding address 16 and priority identifier 29 in the routing table 30. Thus, if the extracted topic identifier were ":314", this would give a forwarding address of fred@domain1.com, but if the extracted topic identifier were "mail", this would produce a not found error. In the absence of a not found error (step 52 - no), the destination address in the e-mail header (mail@domain1.com) is replaced in step 54 with the forwarding address (fred@domain1.com) found in the routing table 30. Then, in steps 56,58, the topic identifier and the priority identifier are added as new items to the e-mail header, so that the header now includes:

| | |
|---|---|
| Destination address | fred@domain1.com |
| Source address | customer@domain2.com |
| Topic identifier | :314 |
| Priority identifier | 1 |

If there is a not found error (step 52 - yes), then in step 60, the destination address in the e-mail header (mail@domain1.com) is replaced in step 60 with the system default address (alice@domain1.com), so that the header now includes:

| | |
|---|---|
| Destination address | alice@domain1.com |
| Source address | customer@domain2.com |

After step 58 or 60, the program waits if necessary at step 62 until the reception of the message in the e-mail is complete, and then in step 64 the e-mail is forwarded to the modified destination address. A note of the e-mail may also be added to an e-mail log in step 66. The next e-mail is then awaited in step 40.

As a result of the above, if the incoming e-mail was addressed to support:314@domain1.com, it is sent to Fred's inbox for him to deal with, whereas if it was addressed to mail@domain1.com, it is sent to Alice's inbox for her to allocate it to one of the agents.

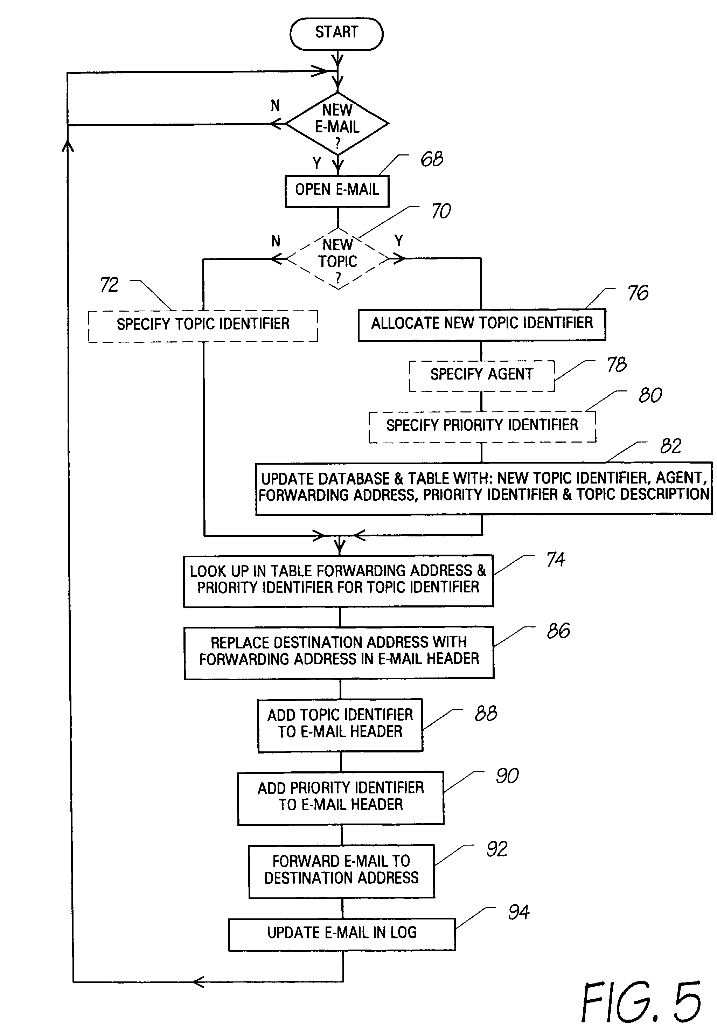

The allocation process will now be described with reference to Figure 5. In Figure 5, the steps which are boxed in full line are performed solely by the computer system, whereas the steps which are boxed in dashed line require input from Alice.

When the e-mail is received in Alice's inbox, it is opened in step 68, and Alice is invited in step 70 to indicate whether or not it relates to a new topic, and to assist her in this decision, the content of the calls database 20 may be displayed to Alice. If Alice indicates that it does not relate to a new topic, then in step 72 Alice is invited to specify the topic identifier (e.g. 315).

If, on the other hand, Alice indicates that the e-mail relates to a new topic (step 70 - yes), then in step 76 a currently unused topic identifier (say, 317) is selected. In steps 78,80, Alice is invited to specify one of the agents for the new topic (say, Jim), and a priority identifier for it (say, 0). She may also be invited to specify a short description of the topic (not shown in Figure 5). In step 82, the topic database 20, and as a result the routing table 30, are updated with new entries for the new topic.

After step 72 or 82, the appropriate priority identifier and forwarding address for that topic identifier are then looked up in the routing table 30 (step 74). The process then continues with steps 86,88,90,92,94 which are similar to steps 54,56,58,64,66 described above with respect to Figure 4.

As a result, with the examples given, if in step 70 it was indicated that the e-mail relates to an existing topic, the e-mail is forwarded with a modified header including:-

| | |
|---|---|
| Destination address | bert@domain1.com |
| Source address | customer@domain2.com |
| Topic identifier | :315 |
| Priority identifier | 1 |

On the other hand, if it was indicated to relate to a new topic, it is forwarded with a modified header including:-

| | |
|---|---|
| Destination address | jim@domain1.com |
| Source address | customer@domain2.com |
| Topic identifier | :317 |
| Priority identifier | 0 |

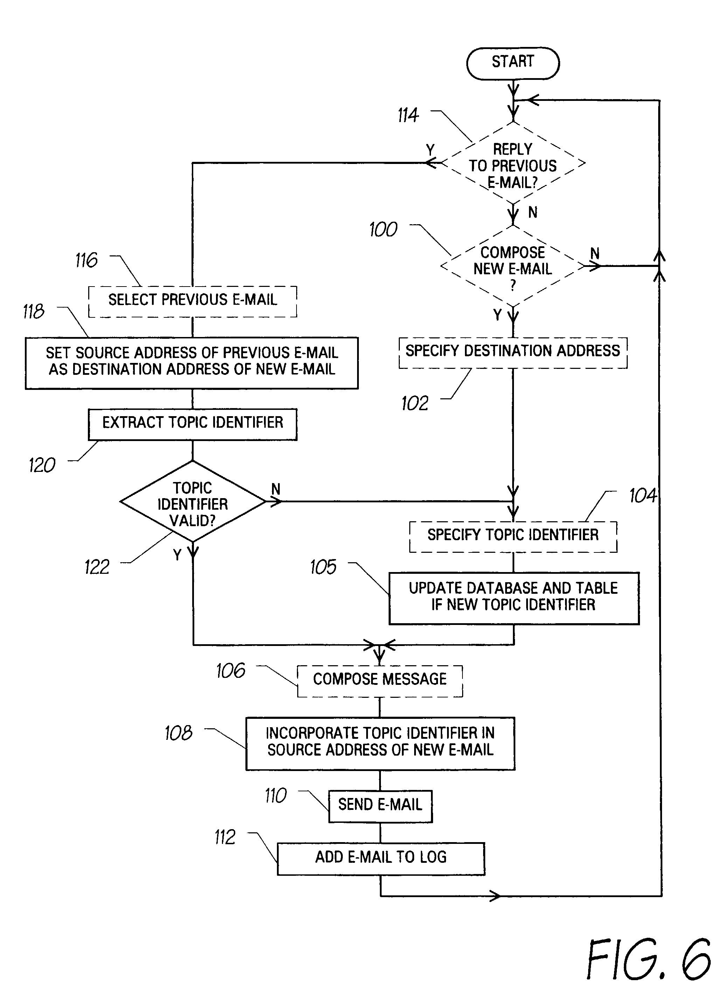

The process for sending an e-mail will now be described with reference to Figure 6. In the example which will be given, the agent in question is Bert and his default source e-mail address for sending mail is support@domain1.com. If, in step 100, he indicates that he wishes to send a new e-mail, then in step 102, he is invited to specify the destination address (say, customer@domain2.com). Then, in step 104, he is invited to specify a topic identifier, and to assist in this a list may be provided displaying information from the calls database 20. He may also be given the option (not shown in Figure 6) to specify that the topic is new, whereupon the system allocates a currently unused topic identifier, and Bert is invited to specify an agent and priority identifier for the new topic, and possibly a short description of the topic, and in this case in step 105 the database 20 and routing table 30 are updated accordingly, similarly to steps 76 to 82 as described above with reference to Figure 5. Say that he selects existing topic identifier 315. Then, in step 106, he composes the content of the e-mail. Once the e-mail is ready to send, in step 108, the source address in the header of the e-mail is modified so as to add the topic identifier, with a leading colon ":" between the user name and the "@". Accordingly, in this example, the header is changed from:

| | |
|---|---|
| Destination address | customer@domain2.com |
| Source address | support@domain1.com |

to:-

| | |
|---|---|
| Destination address | customer@domain2.com |
| Source address | support:315@domain1.com |

In step 110, the e-mail is then sent, and in step 112 a note of the e-mail is added to the log. It will therefore be appreciated that if the customer subsequently replies to this e-mail using its source address as the destination address for the reply e-mail, it will be sent to support:315@domain1.com, and will then be routed to Bert or to whoever may have taken over from Bert as the designated agent for topic 315.

If the agent wishes to reply to a previously received e-mail, then this is indicated in step 114, and in step 116 the previous e-mail is selected, for example the e-mail mentioned above with a header containing:-

| | |
|---|---|
| Destination address | bert@domain1.com |
| Source address | customer@domain2.com |
| Topic identifier | :315 |
| Priority identifier | 1 |

In steps 118,120, the source address (customer@domain2.com) of the previous e-mail is set as the destination address of the reply e-mail and the topic identifier (315) is noted. In step 122, a check is made with the routing table 30 that the topic identifier is still valid. If not, then the process proceeds to step 104 described above so that a different valid topic identifier can be specified. However, if the topic identifier is still valid, the process proceeds directly to step 106 described above, and then to steps 108,110,112. As a result, the reply e-mail is sent with a header containing:-

| | |
|---|---|
| Destination address | customer@domain2.com |
| Source address | support:315@domain1.com |

It will be appreciated that many modifications and developments may be made to the embodiment of the invention described above.

For example, routines may be provided for amending and/or deleting entries in the calls database 20 to take account of changes in personnel, holidays and other reorganisations.

In the embodiment described above, the decision in step 70, Figure 5, as to whether a topic is new or not is made by the allocating agent alone. This decision may be replaced by an automatic decision, as is already known *per se,* based on the source address in the e-mail, the original destination address in the e-mail and/or a keyword analysis of the message in the e-mail. Alternatively, these things may be used to assist the allocating agent in making her decision.

In the embodiment described above, an incoming e-mail which includes a valid topic identifier is deposited in a particular mailbox in dependence upon that topic identifier. Alternatively, the topic identifier may be used to selected a group of mailboxes or agents, and then other methods may be employed to select a particular mailbox or agent in that group, for example in dependence upon the source address in the e-mail, the original destination address in the e-mail, a keyword analysis of the message in the e-mail, and/or the current workload and/or availability of the agents.

In the process described with reference to Figure 6, a topic identifier is either extracted from a previous e-mail (step 120) or is specified by the agent (step (104). The topic identifier may be determined in other ways, for example in dependence upon the identity of the agent generating the e-mail, or a workgroup to which he belongs, or the machine on which he is working.

It should be noted that the description of the embodiment of the invention has been given above purely by way of example and that many other modifications and developments may be made thereto within the scope of the invention.

## Claims

1. A method of routing e-mails, wherein:
each e-mail includes a message and a destination address; and
at least some of the e-mails are each of a first type for which the user name is formed from a user identifier, a topic identifier and a domain name, the topic identifier being relevant to the topic of the respective message;
the method comprising the steps of:
maintaining a table (30) of entries (32), each entry including one of a plurality of such topic identifiers (24) and a respective one of a plurality of forwarding addresses (16);
receiving (42,62) an e-mail of the first type;
extracting (48) the respective topic identifier from the destination address of the e-mail which has been, or is being, received;
determining (50) from the table which one of the forwarding addresses corresponds to the topic identifier extracted from the respective e-mail; and
routing (54,64) the e-mail to a respective one of a plurality of mailboxes in dependence upon the forwarding address determined from the table.

2. A method as claimed in claim 1, wherein, for a particular e-mail, the step (48) of extracting the topic identifier from the respective destination address is commenced before the step (62) of receiving that e-mail has been completed.

3. A method as claimed in claim 1 or 2, wherein:
in the destination address contained in such an e-mail, the topic identifier has a predetermined length; and
in the extracting step, a portion of the destination address of said predetermined length is extracted.

4. A method as claimed in any preceding claim, wherein:
in the destination address contained in such an e-mail, the topic identifier begins at a first predetermined position and/or ends at a second predetermined position; and
in the extracting step, a portion of the destination address beginning at said first predetermined position and/or ending at said second predetermined position is extracted.

5. A method as claimed in any preceding claim, wherein:
in the destination address contained in such an e-mail, the topic identifier is delimited at least in part by at least one predetermined character; and
in the extracting step, a portion of the destination address which is delimited at least in part by said at least one predetermined character is extracted.

6. A method as claimed in any preceding claim, wherein each destination address is a concatenation of the user identifier, the topic identifier, the domain name, and optionally at least one predetermined delimiter character.

7. A method as claimed in any preceding claim, wherein, for at least some of the forwarding addresses, there is a one-to-one correspondence between at least some of the mailboxes and those forwarding addresses.

8. A method as claimed in any of preceding claim, wherein, for at least some of the forwarding addresses, each e-mail is routed to one of the mailboxes selected in dependence upon:
the forwarding address for the respective e-mail; and
the destination address of that e-mail, a source address contained in that e-mail, an analysis of the message in that e-mail, and/or weightings for the mailboxes.

9. A method as claimed in any preceding claim, wherein:
each entry in the table includes one of a plurality of priority identifiers (29); and
the method includes the steps, for each such e-mail, of:
determining (50) from the table which one of the priority identifiers corresponds to the respective extracted topic identifier; and
adding (58) the determined priority identifier to the e-mail.

10. A method as claimed in any preceding claim, further including the step of adding (82), deleting and/or amending such entries to, from and/or in the table.

11. A method as claimed in any preceding claim, wherein the adding, deleting and/or amending step is performed by a database management system (20).

12. A method as claimed in claim 11, wherein the database management system is operable to store details of communications, and, for a communication on a topic which is adjudged to be new (70), to assign (76) a new topic identifier thereto and to store (82) the new topic identifier and a respective forwarding address therefor in the table.

13. A method as claimed in any preceding claim, wherein at least some other of the e-mails are each of a second type for which such a topic identifier is not used in forming the destination address, the method further including the steps of:
receiving e-mails of the second type in addition to the first type;
determining (52) whether or not the destination address of each such e-mail which is being, or has been, received includes such a topic identifier; and
if not, routing (60,64) the respective e-mail to a predetermined one of the mailboxes or to a selected one of the mailboxes selected in dependence upon the destination address of that e-mail, a source address contained in that e-mail, an analysis of the message in that e-mail, and/or weightings for the mailboxes.

14. A method as claimed in any preceding claim, further including the steps of:
generating (102,106,118) e-mails each containing a message and a source address, the source address comprising a user name and a domain name;
modifying (108) the source address of each such generated e-mail so as to include in the user name such a topic identifier relevant to the respective message; and
transmitting (108) each generated e-mail after modification of its source address.

15. A method as claimed in claim 14, wherein the topic identifier is selected in dependence upon one of the following:
input (104) from a person generating the e-mail;
a topic identifier (120) in a previous e-mail to which the e-mail in question is a reply;
the identity of the person generating the e-mail;
the identity of a workgroup to which the person generating the e-mail belongs; and
the identity of a machine with which the e-mail is generated.

16. A system for routing e-mails, wherein:
each e-mail includes a message and a destination address; and
at least some of the e-mails are each of a first type for which the user name is formed from a user identifier, a topic identifier and a domain name, the topic identifier being relevant to the topic of the respective message;
the system comprising:
means for maintaining a table (30) of entries (32), each entry including one of a plurality of such topic identifiers (24) and a respective one of a plurality of forwarding addresses (16);
means for receiving an e-mail of the first type;
means for extracting the respective topic identifier from the destination address of the e-mail which has been, or is being, received by the receiving means;
means for determining from the table maintaining means which one of the forwarding addresses corresponds to the topic identifier extracted from the respective e-mail; and
means for routing the e-mail to a respective one of a plurality of mailboxes in dependence upon the forwarding address determined by the forwarding address determining means.
